# EUROPEAN PATENT APPLICATION

(11) **EP 1 558 046 A1**
(43) Date of publication of application: **27.07.2005**
(21) Application number: 05001140.2
(22) Date of filing: 20.01.2005
(51) Int. Cl.: H04Q 7/34

(54) **Non-service area determining system and method thereof**

(30) Priority: 23.01.2004 JP 2004016324
(71) Applicant: NEC CORPORATION, Tokyo (JP)
(72) Inventor: Yoshioka, Nobuhiro, Minato-ku Tokyo (JP)
(74) Representative: Betten & Resch

(57) **Abstract**

A non-service area determining system capable of obtaining information on the non-service areas of radio base stations easily and continuously, thereby reducing time, man power and cost. A vehicle is equipped with one or more mobile communication terminals. The mobile communication terminal obtains information on locations where the mobile communication terminal cannot receive radio waves from radio base stations by a non-service area information obtaining section, and transmits the location information to a server by a location information transmitter. The server recognizes a non-service area based on the location information by a recognition section, and displays information on the non-service area.

## Description

### FIELD OF THE INVENTION

The present invention relates to a non-service area determining system and in particular to a non-service area determining system capable of obtaining information on the non-service areas of radio base stations easily by mounting a mobile communication terminal in a vehicle, and a method thereof.

### BACKGROUND OF THE INVENTION

In a mobile communication system for providing cellular telephone service, it has been known that there are present the blind spots or non-service areas of radio base stations where cellular telephone service cannot be performed due to the environmental condition of a mobile phone: reflection caused by the surrounding buildings, interference and the like. In order to maintain the quality of cellular telephone service, the carrier or provider, which offers cellular telephone service, needs to detect the non-service areas of existing radio base stations so as to change area arrangement or establish more radio base stations.

In conventional research for non-service areas, a research team is formed after the setting of a model route to obtain data as to the non-service areas of radio base stations, which are important in optimizing the operation of a radio access network in a cellular telephone system. The research team measures the actual condition of radio waves on foot or by repeatedly driving an area measuring car equipped with a device for measuring the radio field intensity.

Or else, the research team dispatches the area measuring car to a service area in research zone based on a complaint from a user or quality information obtained from a radio line between a cellular telephone and a radio base station. There is found in Japanese Patent Application laid open No. 2003-204296 an example of such conventional technique for measuring the condition of radio waves.

Besides, there has been proposed in Japanese Patent Application laid open No. 2004-235827 a technique for detecting a non-service area. According to the technique, a cellular telephone set in a fixed point is provided with a GPS (Global Positioning System) function. The cellular telephone monitors the condition of radio communication with a radio base station to transmit non-service area information to a mobile communication management center. The statistical process is performed based on the non-service area information to thereby estimate a candidate site for a non-service area.

However, the above conventional techniques have some problems as follows.

The arrangement of the area measuring car equipped with a device for measuring the radio field intensity requires a special measuring device. Additionally, frequent arrangements for the area measuring car increase costs and complicates preparatory procedures. Therefore, it is difficult to carry out research continuously even in the case where the frequency of research is increased. Further, a research team has to be specifically formed.

In the conventional technique disclosed in Japanese Patent Application laid open No. 2004-235827, a cellular telephone for monitoring is set in a fixed point, and a large number of cellular telephones are set in a broad area, which complicates maintenance. Further, whether communication is possible or not can be determined only for a cellular telephone in the stationary state, and the radio wave receiving condition of a cellular telephone used by, as is often the case with a cellular telephone, a moving user cannot be determined.

### SUMMARY OF THE INVENTION

It is therefore an object of the present invention to provide a non-service area determining system capable of obtaining information on the non-service areas of radio base stations easily and continuously by mounting a mobile communication terminal in a vehicle used for providing such services as mail delivery, parcel delivery, newspaper delivery, and transport (a route or shuttle bus, a taxi, etc.), thus reducing time, man power and cost, and a method thereof.

In accordance with the first aspect of the present invention, to achieve the object mentioned above, there is provided a non-service area determining system comprising one or more mobile communication terminals, radio base stations for transmitting radio waves to the mobile communication terminal(s), a server and a vehicle, wherein: the mobile communication terminal includes a receiver for receiving radio waves from the radio base stations, a non-service area information obtaining section for obtaining information on locations where the mobile communication terminal cannot receive radio waves from the radio base stations, and a location information transmitter for transmitting the location information obtained by the non-service area information obtaining section to the server; the server includes a location information receiver for receiving the location information from the mobile communication terminal, a recognition section for recognizing a non-service area, based on the location information received by the location information receiver, and a display for displaying information on the non-service area recognized by the recognition section; and the vehicle is equipped with the mobile communication terminal.

In accordance with the second aspect of the present invention, in the non-service area determining system of the first aspect, the vehicle is a vehicle involved in at least one selected from mail delivery service, parcel delivery service, newspaper delivery service, bus service and taxi service.

In accordance with the third aspect of the present invention, in the non-service area determining system of the first or second aspect, the recognition section of the server recognizes a location as a non-service area when the number of times the location information receiver receives information on the location from the mobile communication terminal exceeds a prescribed threshold value.

In accordance with the fourth aspect of the present invention, there is provided a non-service area determining method using one or more mobile communication terminals, radio base stations for transmitting radio waves to the mobile communication terminal(s), a server and a vehicle, the method comprising the steps of: in the mobile communication terminal mounted on the vehicle, receiving radio waves from the radio base stations, obtaining information on locations where the mobile communication terminal cannot receive radio waves from the radio base stations, and transmitting the location information obtained to the server; in the server, receiving the location information from the mobile communication terminal, recognizing a non-service area based on the location information received, and displaying information on the non-service area recognized.

In accordance with the fifth aspect of the present invention, in the non-service area determining method of the fourth aspect, the vehicle is a vehicle involved in at least one selected from mail delivery service, parcel delivery service, newspaper delivery service, bus service and taxi service.

In accordance with the sixth aspect of the present invention, in the non-service area determining method of the fourth or fifth aspect, in the step of recognizing a non-service area, a location is recognized as a non-service area when the number of times information on the location is received from the mobile communication terminal exceeds a prescribed threshold value.

As described above, in the non-service area determining system of the present invention, the mobile communication terminal comprises a receiver for receiving radio waves from the radio base stations, a non-service area information obtaining section for obtaining information on locations where the mobile communication terminal cannot receive radio waves from the radio base stations, and a location information transmitter for transmitting the location information obtained by the non-service area information obtaining section to the server; the server comprises a location information receiver for receiving the location information from the mobile communication terminal, a recognition section for recognizing a non-service area based on the location information received by the location information receiver, and a display for displaying information on the non-service area recognized by the recognition section; and the vehicle is equipped with the mobile communication terminal.

Further, the non-service area determining method of the present invention comprises the steps of: in the mobile communication terminal mounted on the vehicle, receiving radio waves from the radio base stations, obtaining information on locations where the mobile communication terminal cannot receive radio waves from the radio base stations, and transmitting the location information obtained to the server; in the server, receiving the location information from the mobile communication terminal, recognizing a non-service area based on the location information received, and displaying information on the non-service area recognized.

Thus, it is possible to obtain information on the non-service areas of the radio base stations easily and continuously while reducing time, man power and cost.

### BRIEF DESCRIPTION OF THE DRAWINGS

The objects and features of the present invention will become more apparent from the consideration of the following detailed description taken in conjunction with the accompanying drawings in which:
Fig. 1 is a diagram showing the construction of a non-service area determining system according to an embodiment of the present invention;
Fig. 2 is a block diagram showing the construction of a mobile communication terminal according to an embodiment of the present invention;
Fig. 3 is a pattern diagram showing the condition where the mobile communication terminal moves within a mobile communication system;
Fig. 4 is a table showing the radio wave receiving conditions of the mobile communication terminal; and
Fig. 5 is a flowchart showing the operation of a non-service area determining system when a server obtains information on a location as a candidate site for a non-service area.

### DESCRIPTION OF THE PREFERRED EMBODIMENT

Referring now to the drawings, a description of a preferred embodiment of the present invention will be given in detail.

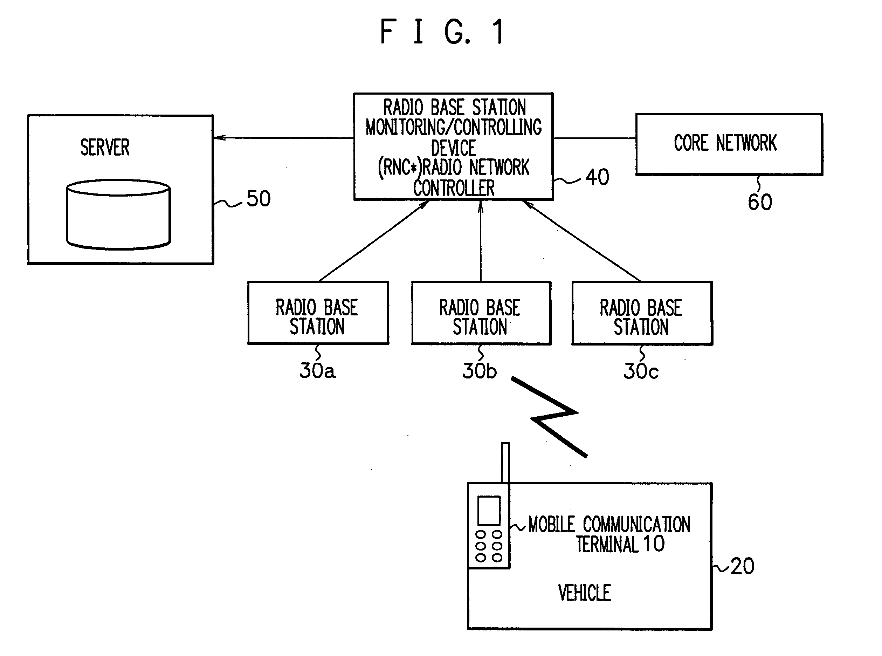

Fig. 1 is a diagram showing the construction of a non-service area determining system according to an embodiment of the present invention. Referring to Fig. 1, the non-service area determining system comprises a mobile communication terminal 10, a vehicle 20 equipped with the mobile communication terminal 10, radio base stations 30a to 30c, a radio base station monitoring/ controlling device 40 for monitoring the radio base stations 30a to 30c, a server 50 and a core network 60.

The mobile communication terminal 10 is an information processing device such as a cellular telephone, a PHS (Personal Handy Phone), a notebook-sized personal computer, and a PDA (Personal Digital Assistant). Besides, communication may be performed via a wired or wireless network, and it may be, for example, wireless LAN communication, Bluetooth, infrared data communication or the like.

The vehicle 20 is a vehicle used for providing such services as mail delivery, parcel delivery, newspaper delivery and transport. Examples of the vehicle 20 include an automobile, a motorcycle, a bicycle, a route or shuttle bus, and a taxi. Non-service area determination or detection may be consigned to institutions or companies that perform such services. Incidentally, the mobile communication terminal 10 may be built into the vehicle 20, or may be mounted on the vehicle 20 so as to be demountable. Further, the vehicle 20 may be equipped with a plurality of the mobile communication terminals 10.

There are a large number of vehicles used for such services, and the vehicles travel extensively. Consequently, non-service area detection can be performed in a broad area. In addition, the vehicles used for such services move and stop regularly or repeatedly, and therefore, it is possible to measure the radio wave receiving condition of the mobile communication terminal 10 in the stationary and moving states. Moreover, the vehicles used for such services can reach the bottom of a narrow alley in a residential block, and therefore, detailed and meticulous detection can be conducted in a certain range. Furthermore, the vehicles used for such services return to a prescribed place as a base, and therefore, the maintenance of the mobile communication terminals mounted thereon can be carried out in one location, which facilitates the maintenance.

The radio base station 30 (30a to 30c) establishes a radio link with radio waves to the mobile communication terminal 10. The radio base station 30 is composed of an antenna and main equipment. When communicating, the mobile communication terminal 10 generally transmits/ receives radio signals to/ from the radio base station placed nearby.

The radio base station monitoring/ controlling device 40 is connected to a plurality of the radio base stations 30 to control their operations. Additionally, the radio base station monitoring/controlling device 40 has a function for relaying communication to the core network 60 being an exchange network. The radio base station monitoring/ controlling device 40 may control the switching of the radio base stations 30 utilized by the mobile communication terminal 10 according to, for example, channel establishment, channel open, or the movement of the terminal 10.

The server 50 is an information processing device such as a workstation having a function for storing the data of non-service areas, and determining non-service areas based on the data. The server 50 may be provided with a prescribed database.

The core network 60 is the backbone section of the mobile communication network including a mobile exchange for controlling calls, a gateway mobile exchange for connecting the mobile communication terminal 10 to a fixed telephone or the like, a database for registering or storing subscriber information, and the like. These may be connected to an operation control center.

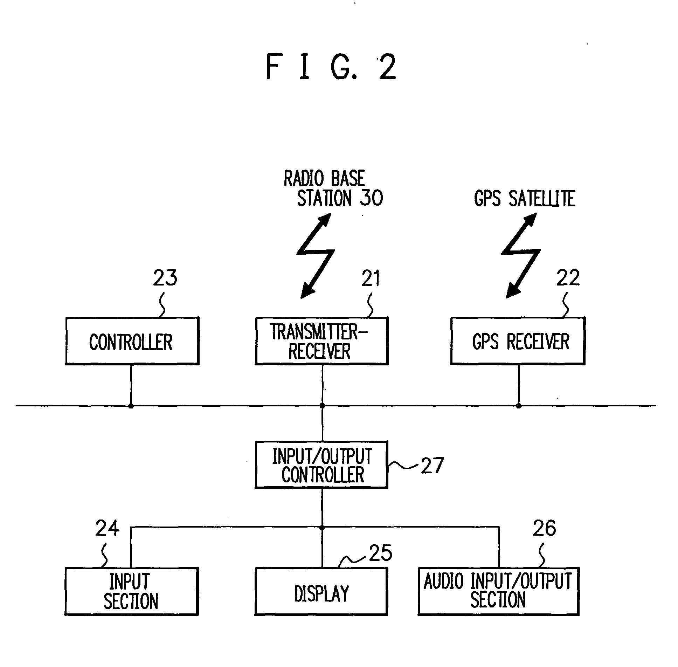

Fig. 2 is a block diagram showing the construction of the mobile communication terminal 10. The mobile communication terminal 10 comprises a transmitter-receiver 21, a GPS receiver 22, a controller 23, an input section 24, a display 25, an audio input/ output section 26 and an input/ output controller 27.

The transmitter-receiver 21 has a function for communicating with the radio base station 30. The GPS receiver 22 has a function for receiving GPS signals sent from GPS satellites. The controller 23 has a function for, when the mobile communication terminal 10 can receive GPS signals but cannot communicate with the radio base station 30, obtaining and retaining positional information and transmitting the positional information to the radio base station 30 at the time communication with the base station 30 becomes possible. The input section 24 includes operation keys for inputting information and instructions. The display 25 has a function for displaying information. The audio input/ output section 26 has a function for inputting and outputting sound or voice. The input/ output controller 27 functions as an interface between the input section 24, display 25 and audio input/ output section 26.

As a substitute for the GPS receiver 22, the mobile communication terminal 10 may be provided with a function for enabling information on the geographic location of the terminal 10 to be always acquired based on information from a radio access network. Incidentally, the geographic location information is information as to the latitude, longitude and altitude.

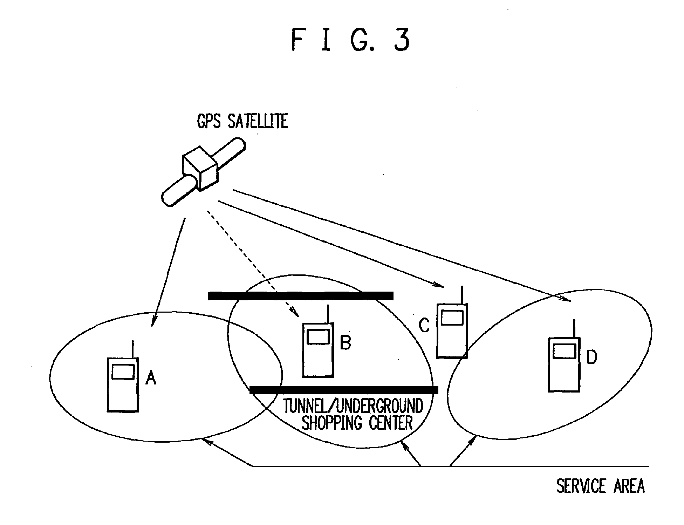

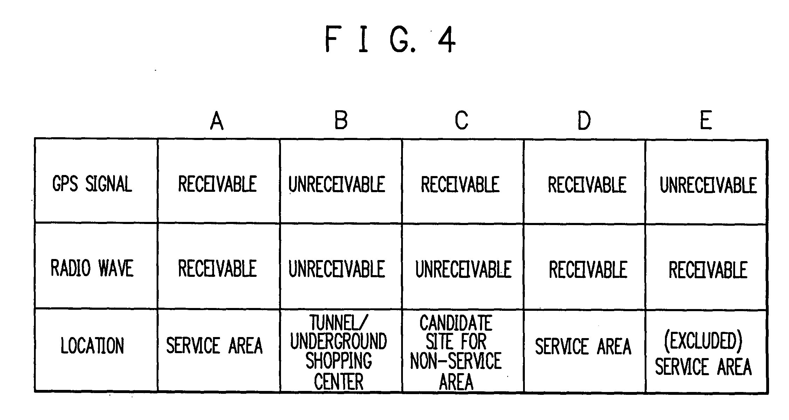

In the following, a description will be given of the operation of the non-service area determining system of this embodiment referring to Figs. 3 and 4.

Fig. 3 is a pattern diagram showing the condition where the mobile communication terminal 10 moves within a mobile communication system. Fig. 4 is a table showing the radio wave receiving conditions of the mobile communication terminal 10 in the respective areas shown in Fig. 3, being associated with the areas.

In Fig. 3, location A indicates a service area where the mobile communication terminal 10 can receive radio waves from both GPS satellites and the radio base station 30, corresponding to "A" in the table of Fig. 4. Location B indicates a place where the mobile communication terminal 10 cannot receive radio waves from GPS satellites and the radio base station 30, such as in a tunnel or an underground shopping center, corresponding to "B" in the table of Fig. 4. Location C indicates a candidate site for a blind spot or a non-service area where the mobile communication terminal 10 can receive radio waves from GPS satellites but it cannot receive radio waves from the radio base station 30 due to the surrounding buildings, interference and the like, corresponding to "C" in the table of Fig. 4. Location E indicates a place where the mobile communication terminal 10 cannot receive radio waves from GPS satellites but it can receive radio waves from the radio base station 30. This case occurs by merely poor radio wave reception from GPS satellites, and location D is excluded from candidate sites for non-service areas according to the present invention.

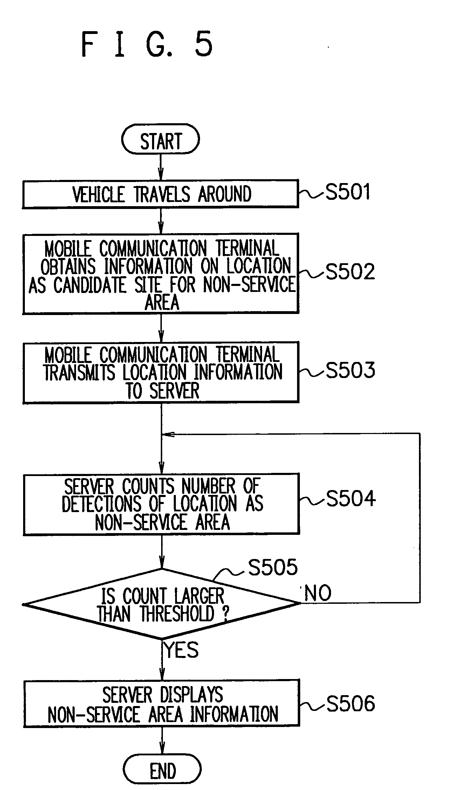

Fig. 5 is a flowchart showing the operation of a non-service area determining system when a server 50 obtains information on a location as a candidate site for a non-service area from the mobile communication terminal 10.

First, the vehicle 20 equipped with the mobile communication terminal 10 travels along a fixed route or one place after another for providing services such as mail delivery (step S501).

The mobile communication terminal 10 mounted on the vehicle 20 constantly monitors whether or not GPS signals can be received and whether or not radio waves from the radio base station 30 can be received through the controller 23. When the mobile communication terminal 10 has moved into a location as a candidate site for a non-service area where GPS signals or radio waves from GPS satellites can be received while radio waves from the radio base station 30 cannot be received, the terminal 10 obtains information on the location including the latitude and longitude of the location as a candidate site for a non-service area from GPS signals (step S502). At this point, information on the time when the mobile communication terminal 10 is out of the service area may be retained.

Next, for example, in the case where the vehicle 20 has moved into location D from location C shown in Fig. 3, the mobile communication terminal 10 mounted on the vehicle 20 transmits the location information obtained as above to the server 50 as non-service area information via the radio base station 30 and the radio base station monitoring/ controlling device 40 (step S503). At this point, information on the time when the mobile communication terminal 10 is out of the service area may also be transmitted to the server 50.

The server 50 stores the non-service area information received from the mobile communication terminal 10 mounted on the vehicle 20 in a prescribed database. The server 50 performs, for example, mapping of the non-service area onto non-service area management map data to count the number of detections of the location as a non-service area (step S504). At this point, the server 50 may receive information on the time when the mobile communication terminal 10 is out of the service area.

Subsequently, the server 50 determines whether or not the count is larger than a prescribed threshold value (step S505). If the count is larger than a prescribed threshold value, the server 50 regards the location as a non-service area, and displays this information on a display or the like (step S506). Accordingly, the carrier or provider which offers cellular telephone service can review area arrangement and consider the establishment of more radio base stations as required by collating the non-service area information and time information displayed with the service area map.

Incidentally, in the above-described preferred embodiment of the present invention, changes or modifications may be made without departing from the scope and spirit of the present invention. For example, by replacing the radio base station 30 with a node B and the radio base station monitoring/ controlling device 40 with an RNC (Radio Network Controller), the present invention can be applied to W-CDMA, one of the third generation cellular telephone systems.

In addition, the present invention is applicable to the second generation cellular telephone systems such as GSM (Global System for Mobile Communications), PDC (Personal Digital Cellular), TDMA (Time Division Multiple Access), and also to CDMA 2000 of the third generation cellular telephone systems.

As set forth hereinabove, in accordance with the present invention, a mobile communication terminal comprises a receiver for receiving radio waves from a radio base station, a GPS unit for obtaining information on locations where radio waves from the radio base station cannot be received, and a location information transmitter for transmitting the location information obtained by the GPS unit to a server, while the server comprises a location information receiver for receiving the location information from the mobile communication terminal, a recognition unit for recognizing a non-service area based on the location information received by the location information receiver, and a display for displaying information on the non-service area recognized by the recognition unit. Besides, a vehicle has a structure enabling it to be equipped with the mobile communication terminal. Thus, it is possible to realize a non-service area determining system capable of obtaining information on the non-service areas of the radio base stations easily and continuously, thereby reducing time, man power and cost.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

According to an embodiment, it is provided a non-service area determining system capable of obtaining information on the non-service areas of radio base stations easily and continuously, thereby reducing time, man power and cost. A vehicle is equipped with one or more mobile communication terminals. The mobile communication terminal obtains information on locations where the mobile communication terminal cannot receive radio waves from radio base stations by a non-service area information obtaining section, and transmits the location information to a server by a location information transmitter. The server recognizes a non-service area based on the location information by a recognition section, and displays information on the non-service area.

## Claims

1. A non-service area determining system comprising one or more mobile communication terminals, radio base stations for transmitting radio waves to the mobile communication terminal, a server and a vehicle, wherein
the mobile communication terminal includes:
a receiver for receiving radio waves from the radio base stations;
a non-service area information obtaining section for obtaining information on locations where the mobile communication terminal cannot receive radio waves from the radio base stations; and
a location information transmitter for transmitting the location information obtained by the non-service area information obtaining section to the server;
the server includes:
a location information receiver for receiving the location information from the mobile communication terminal;
a recognition section for recognizing a non-service area based on the location information received by the location information receiver; and
a display for displaying information on the non-service area recognized by the recognition section; and
the vehicle is equipped with the mobile communication terminal.

2. The non-service area determining system claimed in claim 1, wherein the vehicle is a vehicle involved in at least one selected from mail delivery service, parcel delivery service, newspaper delivery service, bus service and taxi service.

3. The non-service area determining system claimed in claim 1 or 2 , wherein the recognition section of the server recognizes location as a non-service area when the number of times the location information receiver receives information on the location from the mobile communication terminal exceeds a prescribed threshold value.

4. The non-service area determining system claimed in one of claims 1 to 3, wherein the recognition section of the server recognizes a location as a non-service area when the number of times the location information receiver receives information on the location from the mobile communication terminal exceeds a prescribed threshold value.

5. A non-service area determining method using one or more mobile communication terminals, radio base stations for transmitting radio waves to the mobile communication terminal, a server and a vehicle, the method comprising the steps of:
in the mobile communication terminal mounted on the vehicle,
receiving radio waves from the radio base stations;
obtaining information on locations where the mobile communication terminal cannot receive radio waves from the radio base stations; and
transmitting the location information obtained to the server;
in the server,
receiving the location information from the mobile communication terminal;
recognizing a non-service area based on the location information received; and
displaying information on the non-service area recognized.

6. The non-service area determining method claimed in claim 5, wherein the vehicle is a vehicle involved in at least one selected from mail delivery service, parcel delivery service, newspaper delivery service, bus service and taxi service.

7. The non-service area determining method claimed in claim 5 or 6, wherein, in the step of recognizing a non-service area, location is recognized as a non-service area when the number of times information on the location is received from the mobile communication terminal exceeds a prescribed threshold value.

8. The non-service area determining method claimed in one of claims 5 to 7,
wherein, in the step of recognizing a non-service area, a location is recognized as a non-service area when the number of times information on the location is received from the mobile communication terminal exceeds a prescribed threshold value.
